# EUROPÄISCHE PATENTANMELDUNG

(11) **EP 1 136 896 A2**
(43) Veröffentlichungstag der Anmeldung: **26.09.2001**
(21) Anmeldenummer: 01106843.4
(22) Anmeldetag: 19.03.2001
(51) Int. Cl.: G05B 19/042

(54) **Hochverfügbares Rechnersystem und Verfahren zur Umschaltung von Bearbeitungsprogrammen eines hochverfügbaren Rechnersystems**

(30) Priorität: 23.03.2000 DE 10014390
(71) Anmelder: SIEMENS AKTIENGESELLSCHAFT, 80333 München (DE)
(72) Erfinder: Opgenoorth, Bernd, 90403 Nuernberg (DE); Von Krosigk, Hartmut, 91058 Erlangen (DE)

(57) **Zusammenfassung**

Die Erfindung betrifft ein hochverfügbares Rechnersystem (6) sowie ein Verfahren zur Umschaltung von Bearbeitungsprogrammen eines hochverfügbaren Rechnersystems (6). Das Rechnersystem (6) besteht aus mindestens einem ersten (7) und mindestens einem zweiten (9) Rechner. Auf dem ersten Rechner (7) ist mindestens ein erstes Steuerungsprogramm (8) geladen, das zur Erfassung, Verarbeitung und/oder Ausgabe von Prozess-(17, 40) und/oder Steuerungsdaten (19) von und/oder an ein Automatisierungssystem vorgesehen ist. Auf dem zweiten Rechner (9) ist mindestens ein zum ersten Steuerungsprogramm (8) identisches zweites Steuerungsprogramm (10) geladen, das an einer vorgebbaren Programmstelle wartet. Weiter sind auf dem ersten (7) und auf dem zweiten (9) Rechner je ein Datenaktualisierungsprogramm (42) geladen und gestartet, die die aktuellen Datenwerte des ersten Steuerungsprogramms (8) des ersten Rechners (7) an einer vorgebbaren Programmstelle erfassen, an den zweiten Rechner (9) übertragen und an den entsprechenden Stellen im Programmablauf und in reservierten Speicherbereichen (41) des zweiten wartenden Steuerungsprogramms (10) hinterlegen.

## Beschreibung

Die Erfindung betrifft ein hochverfügbares Rechnersystem sowie ein Verfahren zur Umschaltung von Bearbeitungsprogrammen eines hochverfügbaren Rechnersystems.

Der Erfindung liegt die Aufgabe zugrunde ein hochverfügbares Rechnersystem bzw. ein Verfahren zur Umschaltung von Bearbeitungsprogrammen eines hochverfügbaren Rechnersystems anzugeben, das insbesondere auch in der Automatisierungstechnik möglichst uneingeschränkt einsetzbar ist.

Diese Aufgabe wir durch ein Rechnersystem sowie durch ein Verfahren mit den in den Ansprüchen 1 bzw. 7 angegebenen Merkmalen gelöst.

Vorteilhafte Ausgestaltungen ergeben sich aus den Unteransprüchen.

Der Erfindung liegt die Erkenntnis zugrunde, dass in der Automatisierungstechnik das Problem besteht, dass keine der später noch erläuterten und als "hot standby", "warm standby" bzw. "cold standby" bezeichneten Ablösekonfigurationen für einen ausgefallenen Hauptrechner durch einen Ersatzrechner uneingeschränkt einsetzbar ist. Dies hat seine Ursache darin, dass die von einem sogenannten Automatisierungssystem, z. B. einer speicherprogrammierbaren Steuerung, einem Prozessrechner oder einem Industrie-PC, zu verarbeitenden Prozessdaten zum überwiegenden Teil physikalische Messwerte darstellen, welche sporadischen, nahezu nicht vorhersagbaren Störungen oder Schwankungen ausgesetzt sind. Hierdurch ist es nicht ohne weiteres möglich, eine der oben aufgeführten, bekannten Standby-Verfahren für den Ersatzrechner eines Automatisierungssystems oder einen sogenannten Steuerungsrechner einzusetzen.

Wenn ein Rechner durch einen Fehler in der Hardware oder durch eine Störung der Systemsoftware ausfällt, so sind naturgemäß hiervon auch alle auf diesem Rechner aktuell in Bearbeitung befindlichen Anwenderprogramme, des weiteren auch Tasks genannt, betroffen. Diese können nicht weiterbearbeitet werden, d. h. sie fallen ebenfalls aus. Um die Bearbeitung von Tasks bei einem Rechnerausfall möglichst schnell fortsetzen zu können, kann ein Ersatzrechner bereitstehen, welcher üblicherweise als "Standby-System" bezeichnet wird. Auf diesem kann die Bearbeitung fortgesetzt werden.

Insbesondere abhängig vom Typ der jeweiligen Tasks sind Abläufe zu definieren, welche die Art und Weise der Umschaltung auf das Standby-System und der Fortsetzung der Bearbeitung der jeweiligen Tasks betreffen. So ist es das Ziel, z. B. bei der Steuerung von kontinuierlichen Anwendungs-/ bzw. Steuerungsprozessen in der verfahrens- und fertigungstechnischen Produktion, z. B. bei Produktionsprozessen in der chemischen Industrie, dass ein ausgefallenes Steuerungsprogramm auf dem Ersatzsystem möglichst ohne Rückwirkung auf den Produktionsprozess weiterbearbeitet werden kann, d. h. der Produktions-Prozess darf von der Umschaltung möglichst quasi nichts "merken". Andernfalls wären Schwankungen in der Prozessführung unvermeidlich, welche zumindest vorübergehende Einbußen in der jeweiligen Produktqualität bzw. im Extremfall sogar eine Notabschaltung der prozesstechnischen Anlage zur Folge hätten.

Steuerungsprogramme sind Tasks, welche zyklisch bearbeitet werden, iterativ aktuelle Messwerte und Signale von Messgebern einlesen, die in der prozesstechnischen Anlage installiert sind, diese mit Vorgabewerten in Bezug setzen, hieraus resultierende Stellwerte ermitteln und diese wieder an entsprechende Geber in der prozesstechnischen Anlage ausgeben.

Um bei einem Ausfall des dazugehörigen Rechners und damit der darauf ablaufenden Steuerungstask die Prozessbearbeitung auf einem anderen Rechner möglichst nahtlos fortsetzen zu können, muss auf diesem Ersatzrechner zumindest eine entsprechende, identische Steuerungstask vorhanden sein. Ferner müssen zumindest auf dem Ersatzrechner Programme vorhanden sein, welche es im Falle einer Aktivierung dem Ersatzrechner ermöglichen, die Prozesssteuerung möglichst sprunglos fortzusetzen. Für diesen Vorgang der Ablösung eines Hauptrechners durch einen Ersatzrechner, für die Erhöhung der Verfügbarkeit eines Hauptrechners durch die Verwendung eines Ersatzrechners im Fehlerfall gibt es die drei folgenden bekannten Redundanzkonzepte. Diese werden als "hot standby", "warm standby" und "cold standby" des Ersatzrechners bezeichnet.

Beim sogenannten "hot standby" eines Ersatzrechners werden sowohl auf dem Hauptrechner als auch auf dem Ersatzrechner gleichzeitig identische Steuerungstasks ausgeführt, welche auf die gleichen aktuellen Messwerte und Signale zurückgreifen, die von den Messgebern des technischen Prozesses gelesen werden. Bei Ausfall des Hauptrechners kann der Ersatzrechner die Prozessführung durch Aufschaltung auf denselben sofort übernehmen. Diese sehr aufwendige Lösung beinhaltet einige Nachteile. Zum einen ist der Ersatzrechner aufgrund der parallelen Ausführung der identischen Steuerungstasks unter Umständen so belastet, dass keine anderen Tasks mehr ablaufen können. Der Ersatzrechner kann somit zum Zwecke der Durchführung des "hot standby" Betriebes vollständig ausgelastet sein. Ferner besteht das weitere Problem, dass der Ablauf der Steuerungstask auf dem Hauptrechner und der parallele Ablauf der identischen Steuerungstask auf dem Ersatzrechner regelmäßig mit Hilfe von u. U. aufwendigen Datenaustauschvorgängen synchronisiert werden müssen. Dies hat seine Ursache darin, dass auf Grund von Bauteiletoleranzen auch bei identischen Rechnern mittelfristig eine Auseinanderlaufen der Bearbeitungszustände nicht vermeidbar ist. Ein weiterer, wesentlicher Nachteil wird darin gesehen, dass mit einer auf dem Prinzip des "hot standby" beruhenden Verbindung eines Hauptrechners und eines Ersatzrechners zwar ein Weiterbetrieb des technischen Prozesses bei einem Ausfall in der Hardware des Hauptrechners gewährleistet ist. Aufgrund der sehr engen Bearbeitungssynchronität der Steuerungstasks auf dem Haupt- und dem Ersatzrechner können aber insbesondere softwarebedingte und vom Auftreten eines ganz bestimmten, u. U. seltenen Systemzustands abhängige Fehler auf beiden Systemen gleichzeitig auftreten. Hierdurch kann gleichzeitig ein sogenannter Absturz sowohl des Haupt- als auch des Ersatzrechners verursacht werden.

Bei einem sogenannten "warm standby" ist der Ersatzrechner zwar in Betrieb und mit Hilfe von speziellen Übernahmeroutinen darauf vorbereitet, dass im Falle eines Fehlers im Hauptrechner die dort nicht mehr bearbeitbaren Programme ausgeführt werden sollen. Doch muss im Falle einer Übernahme der letzte konsistente Datensatz des auf dem Hauptrechner unterbrochenen Tasks rekonstruiert werden. Dies wird in der Datentechnik auch als sogenanntes "roll back recovery" bezeichnet. Der Ersatzrechner muss also nach einem Ausfall des Hauptrechners und vor Beginn der Weiterbearbeitung des unterbrochenen Tasks erst selbst einen gültigen Startzustand errechnen. Hierzu greift der Ersatzrechner in der Regel auf ein Speichermedium zu, welches dem ausgefallenen Hauptrechner zugeordnet ist. In diesem sind Fragmente des ursprünglichen Datensatzes und gegebenenfalls zusätzlich sogenannte "recovery Daten" enthalten, welche in der Regel vom Hauptrechner selbst entweder unmittelbar vor dem Ausfall oder zyklisch während des Dauerbetriebes hinterlegt wurden, und womit eine Rekonstruktion eines einigermaßen gültigen Datensatzes durch den Ersatzrechner erleichtert werden soll. Während eines derartigen "roll back recovery"-Vorganges muss der Ersatzrechner die im Speichermedium enthaltenen Daten derart überarbeiten, dass möglichst alle darin enthaltenen und auf die vorangegangene nicht ordnungsgemäße Beendigung des Tasks auf dem Hauptrechner zurückzuführenden Inkonsistenzen bereinigt sind.

Ein derartiges "roll back recovery" beim "warm standby" eines Ersatzrechners weist einige Nachteile auf. So benötigt der Ersatzrechner hierfür Rechenzeit, so dass die Weiterbearbeitung des unterbrochenen Tasks nicht sofort nach dem Ausfall des Hauptrechners möglich ist. Ein wesentlicher Nachteil dieser Strategie wird aber darin gesehen, dass ein "roll back recovery" nicht mit allen Datenformen möglich ist. Vielmehr hat es sich gezeigt, dass sogenannte Prozessdaten, d. h. Daten von technischen Produktions- und Verarbeitungsprozessen, welche in aller Regel analoge Mess- und Stellwerte bzw. binäre Signal- und Steuergrößen darstellen, nicht quasi mit umgekehrter Zeitrichtung rekonstruiert werden können. Dies liegt an der Natur dieser Daten, welche ständig mit nicht vorhersehbaren, quasi sporadisch schwankenden Variationen bzw. vorübergehenden Störungsabweichungen behaftet sind. Ferner unterliegt der innere Zustand des technischen Prozesses auch nach dem Ausfall des Hauptrechners ständigen Veränderungen. Mit dem Ausfall des Hauptrechners bleibt der technische Prozess nicht "stehen". Vielmehr können maßgebliche Prozessgrößen, wie z. B. Drücke und Temperaturen u. U. in noch stärkerem Maße als vor dem Ausfall Veränderungen unterworfen sein.

Schließlich steht beim sogenannten "cold standby" zwar ein Ersatzrechner zur Verfügung. Dieser befindet sich aber nicht im Einsatz und muss bei einer Übernahme der Bearbeitung der Task eines Hauptrechners erst aktiviert werden.

Im Folgenden wird die Erfindung an Hand von in den nachfolgend kurz angeführten Figuren dargestellten Ausführungsbeispielen näher erläutert. Dabei zeigt
- FIG 1 :: prinzipiell die Führung eines technischen Prozesses durch ein hochverfügbares Automatisierungssystem über eine Prozessschnittstelle,
- FIG 2 :: den Ablauf einer aktiven Steuerungstask auf dem Hauptrechner und die Einbindung der zur Datenaktualisierung auf dem Ersatzrechner vorgesehenen Unterprogramme,
- FIG 3 :: die datentechnische Kopplung eines Haupt- und eines Ersatzrechners in einem hochverfügbaren Automatisierungssystem über ein sogenanntes Verfügbarkeitslink, und
- FIG 4 :: die Anwendung der Erfindung auf ein Automatisierungssystem, welches aus einem Verbund von mehr als zwei Rechnern besteht.

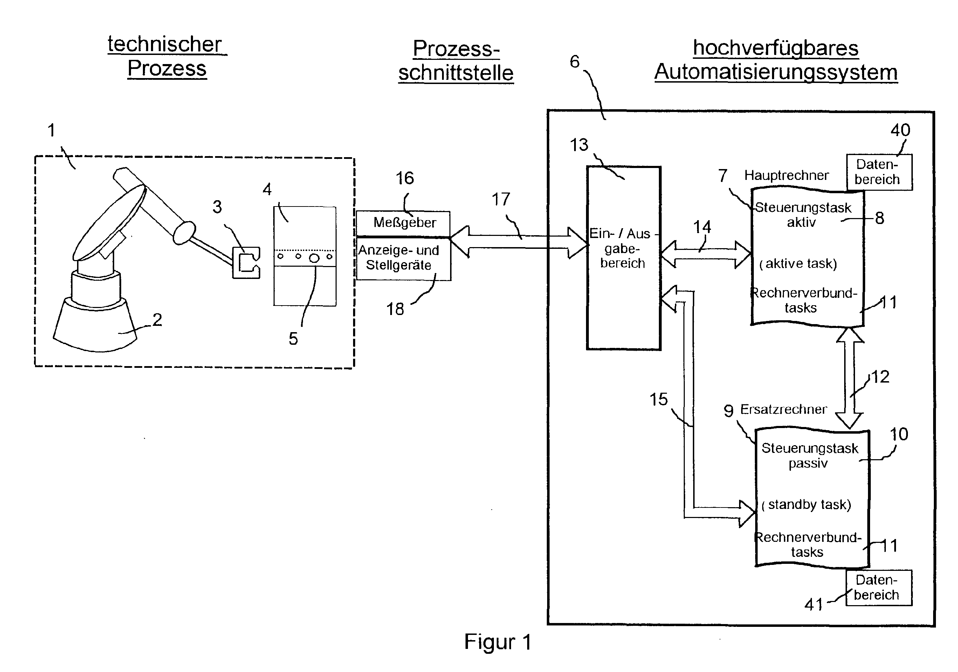

In Figur 1 ist symbolisch ein technischer Prozess 1 dargestellt. Dieser enthält beispielhaft einen Handhabungsautomaten 2, welcher mit Schweißzangen 3 bestückt ist. Hiermit können Schweißpunkte 5 z. B. an ausgewählten Stellen eines zu bearbeitenden Bleches 4 angebracht werden. Zur Führung eines derartigen technischen Prozesses 1 werden in der Regel eine Vielzahl von analogen und binären Messgrößen mit Hilfe von Messgebern 16 erfasst, welche an geeigneten Stellen verteilt im technischen Prozess 1 angeordnet sind. Diese Messgrößen können im dargestellten Beispiel aktuelle Winkelpositionen von Greifarmen des Handhabungsautomaten 1, Istwerte des Schweißstromes, Binärsignale von Endschaltern und vieles mehr sein. Diese Werte werden über eine Datenleitung 17 bevorzugt zyklisch, d. h. in einem vorgegebenen, möglichst hochfrequenten Takt, von einem hochverfügbaren Automatisierungssystem 6 gelesen. Hierdurch werden die aktuellen Prozessmesswerte als aktuelle Programmdaten z. B. über einen gegebenenfalls vorhandenen separaten Ein-/Ausgabebereich 13 in das hochverfügbare Automatisierungssystem 6 geladen.

Das hochverfügbare Automatisierungssystem 6 enthält mindestens zwei, bevorzugt baugleiche Rechner oder autarke Verarbeitungseinheiten. Bei dem in der Figur 1 dargestellten Beispiel wirkt der Rechner 7 als ein sogenannter Hauptrechner und der Rechner 9 als ein sogenannter Ersatzrechner. Jedem Rechner 7, 9 ist ein eigener Datenbereich 40 bzw. 41 zugeordnet, in dem aktuelle Programmdaten abgelegt oder temporär zwischengespeichert werden können. Die Rechner 7, 9 sind über eine Datenverbindungsstrecke 12 miteinander gekoppelt, welche des Weiteren als Verbindungslink bezeichnet und nachfolgend noch näher erläutert wird. Im Hauptrechner 7 werden die jeweils zyklisch von den Messgebern 16 neu eingelesenen und bevorzugt über eine weitere Datenleitung 14 vom Ein- und Ausgabebereich Daten 13 übergebenen Daten mit Hilfe einer Steuerungstask 8 bearbeitet. Diese aktive Task verarbeitet die aktuellen Daten des technischen Prozesses 1 nach prozessspezifischen Kriterien und verknüpft diese gegebenenfalls zusätzlich mit Variablenwerten und Merkerwerten. Als Ergebnis entstehen Anzeige- und Steuerdaten, welche ebenfalls im Takt des Bearbeitungszyklusses der aktiven Steuerungstask 8 über die Datenleitung 14, den Ein- und Ausgabebereich 13, die Datenleitung 17 über prozessseitige Anzeige- und Stellgeräte 18 ausgegeben werden. Über die Stellgeräte 18 können die Betriebsmittel des technischen Prozesses 1, im Beispiel der Handhabungsautomat 2 und die Schweißzangen 3 programm- und ereignisgesteuert beeinflusst werden.

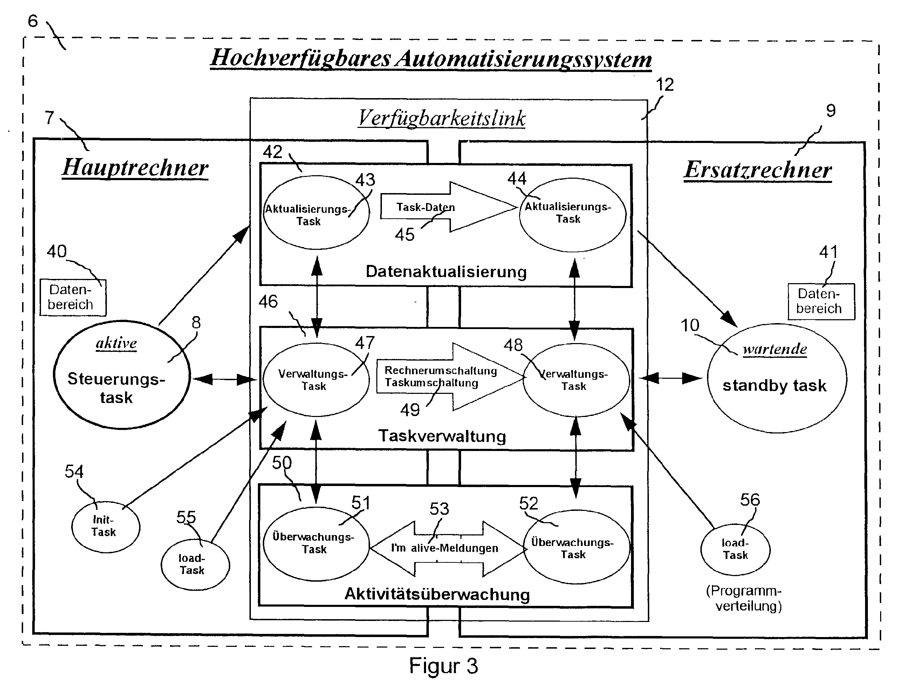

Bei dem erfindungsgemäßen Redundanzkonzept (siehe Figur 3) für ein aus zumindest einem Hauptrechner 7 und einem Ersatzrechner 9 bestehendes Automatisierungssystem 6 wird die im Fehlerfall übernehmende Task, welche nachfolgend auch als Standby-Task 10 bezeichnet wird, insbesondere bei der Initialisierung des Automatisierungssystems 6 auf dem Ersatzsystem 9 gestartet und in einen die Übernahme der Bearbeitung ermöglichenden Wartezustand versetzt. Nach einem Anlauf des Automatisierungssystems 6 wartet also die Standby-Task 10 auf eine Anweisung, welche die Fortsetzung der Befehlsbearbeitung bewirkt. Diese Fortsetzungsanweisung tritt bei Ausfall der aktiven Steuerungstask 8 auf dem Hauptrechner 7 auf. Eine bevorzugte Warteposition für die Standby-Task 10 liegt unmittelbar nach dem Einsprung in deren Bearbeitungszyklus vor, d. h. vor dem Einlesen 22 der aktuellen Prozesseingabedaten.

Um die Prozessbearbeitung bei Ausfall des Hauptrechners 7 bzw. eines die Weiterbearbeitung der Steuerungstask 8 auf dem Hauptrechner 7 unterbrechenden Fehlerzustandes möglichst nahtlos fortsetzen zu können, muss die wartende Standby-Task 10 mit möglichst aktuellen Bearbeitungsdaten versorgt werden. Dies wird gemäß der vorliegenden Erfindung dadurch erreicht, dass die Daten der aktiven Task 8 der identischen, wartenden Standby-Task 10 zyklisch quasi "untergeschoben" werden. Die Standby-Task 10 ist somit immer mit aktuellen Daten für den Übernahmefall versorgt und kann die Bearbeitung unmittelbar fortsetzen. Das Bereitstellen der Daten wird durch eine sogenannte "Aktualisierungstask" 43, 44 vorgenommen, welche auf beiden Rechnern 7, 9 des Automatisierungssystems 6 abläuft.

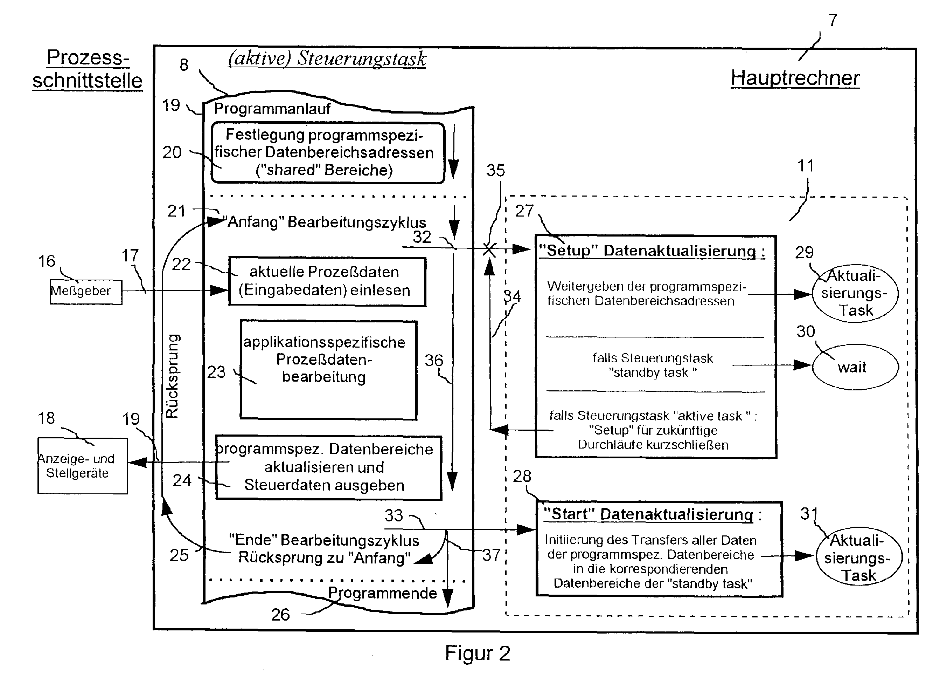

Es ist vorteilhaft, wenn zumindest jeweils am Zyklusende - nach Ausgabe 24 der Steuerungsdaten - die aktuellen Daten der passiven Standby-Task 10 untergeschoben werden (siehe Figur 2). Bei Ausfall der aktiven Steuerungstask 8 setzt die Übernahmetask 10 auf Basis dieser Daten die Bearbeitung mit dem erneuten Einlesen der nun aktuellen Eingangsdaten fort.

Damit die Aktualisierungstask 43 die Daten auf dem einen Rechner, welcher als Hauptrechner 7 dient, von den richtigen Speicherbereichen der aktiven Steuerungstask 8 kopieren kann und die Aktualisierungstask 44 diese Daten auf dem anderen Rechner, welcher als Ersatzrechner 9 dient, der wartenden Standby-Task 10 an die korrespondierenden Speicherbereiche bereitlegen kann, müssen den beiden Aktualisierungstasks 43, 44 die Adressbereiche 40, 41 der Daten sowohl in der aktiven 8 als auch in der Standby-Task 10 über eine entsprechende Funktion bekannt gemacht werden. Damit die Aktualisierungstasks 43, 44 folglich Zugriff auf die zu transferierenden bzw. einzufügenden Daten haben, ist es notwendig, die zu aktualisierenden Daten in einem Speicherbereich 40, 41 abzulegen, auf den sowohl die Steuerungstask 8, 10 als auch die Aktualisierungstasks 43, 44 Zugriff haben.

Je nach Abbruchpunkt der aktiven Task 8 wird das Einlesen der Steuerungsdaten und die Bearbeitung bis zur Abbruchstelle wiederholt. Fällt die aktive Task 8 bei der Ausgabe aus, so muss die gesamte Zyklusbearbeitung einschließlich dem Einlesen der Steuerungsdaten wiederholt werden - worst case. Ist diese Zeit für eine kontinuierliche Fortsetzung des zu steuernden oder zu regelnden Prozesses 1 nicht tragbar, so kann die Aktualisierung der Daten der wartenden Task 10 an mehreren Stellen erfolgen. In diesem Fall werden auch die zuletzt gelesenen Eingangsdaten des aktiven Programmes 8 transferiert und die Fortsetzung des passiven Programmes 10 erfolgt im Übernahmefall an dem zuletzt aktualisierten Punkt.

Ursache des Ausfalls der aktiven Steuerungstask 8 kann ein HW- oder SW-Fehler im System, auf dem die aktive Task 8 läuft, sein. In vielen Fällen führt ein Fehler zu einer entsprechenden Fehlerbehandlungsroutine oder einer Prozessorinterrupt Behandlung. Im Rahmen der Fehlerbehandlung kann das System in der Regel noch über eine entsprechende Ausnahmebehandlung explizit seine Deaktivierung an das Standby-System 10 melden; d. h. die Fortsetzung der wartenden Standby-Task 10 initiieren und die evtl. noch laufende (aktive) Task 8 deaktivieren.

Damit auch ein plötzlicher Totalausfall des Hauptrechners 7, auf dem die aktive Task 8 abläuft, erkannt wird, werden zwischen den Systemen 7, 9 von entsprechenden Tasks 51, 52 zyklisch Lebensüberwachungsmeldungen 53 (*"I'm alive messages*"), ausgetauscht (s. Figur 3). Bei Ausbleiben einer entsprechenden Meldung 53 wird von dem Ausfall des Systems 7, 9 ausgegangen, dessen Meldung 53 nicht in der vereinbarten Zykluszeit empfangen wurde. Mit dem Ausbleiben einer Lebensüberwachungsmeldung 53 wird auch das eigene Senden einer Lebensüberwachungsmeldung 53 ausgesetzt. Bleibt die Überwachungsmeldung 53 von dem System 7 aus, auf dem die aktive Task 8 läuft, so wird von dem Standby-System 9 die Aktivierung der wartenden Standby-Task 10 vorgenommen (einschließlich der Übernahme der notwendigen dezentral angeschlossenen Peripherie). Die Fehlererkennungszeit bzw. Umschaltzeit ist in diesem Fall abhängig von der Zykluszeit der Lebensüberwachungsmeldungen 53. Bleibt die Lebensüberwachungsmeldung 53 vom Standby-System 9 aus, so wird der Ausfall des Standby-Systems 9 vermerkt und im Fehlerfall keine Umschaltung initiiert.

Da im Umschaltfall durch die Aktivierung der wartenden Standby-Task 10 eine zusätzliche Bearbeitungslast auf dem Standby-System 9 entsteht, kann es vorkommen, dass das übernehmende System 9 überlastet ist, d. h. dass die geforderte Zykluszeit nicht mehr eingehalten werden kann. Um dem zuvorzukommen, werden in einer Verfügbarkeitsliste u. a. die Tasks eingetragen, die bei Aktivierung der wartenden Standby-Task 10 evtl. beendet werden müssen. Während in der Regel die Standby-Task 10 identisch der aktiven Task 8 ist, ist es alternativ möglich, einer aktiven Task 8 als Standby-Task 10 eine spezielle "Notfall-Task" zuzuordnen, die bis zur Reparatur des Systems 7, auf dem die aktive Task 8 lief, die Prozessbearbeitung mit verminderter Leistung durchführt oder sogar die Bearbeitung "sanft" herunterfährt. Je nach Art der Standby-Task 10 ist eine Datenaktualisierung 42 durchzuführen oder nicht.

Für jede Task 8, 10 wird auf beiden Systemen 7, 9 in der Verfügbarkeitsliste vermerkt, ob sie eine aktive Task 8 ist, der eine Standby-Task 10 auf einem anderen System zugeordnet ist und ob eine Datenaktualisierung 42 erfolgen soll, sie eine Standby-Task 10 ist, die nach ihrem Start auf die Fortsetzung bei Ausfall der auf einem anderen System 7 zugeordneten aktiven Task 8 wartet und ob eine Datenaktualisierung 42 erfolgen soll, ob sie nur eine lokale Task ohne Standby ist, die bei Fortsetzung wartender Standby-Tasks beendet werden soll, und ob das System 7, 9, auf dem die zugeordnete aktive Task 8 oder Standby-Task 10 gestartet ist, bereitsteht oder fehlerbedingt nicht verfügbar ist.

Die Verwaltung der systemspezifischen Verfügbarkeitslisten wird von lokalen Verwaltungstasks 47, 48 vorgenommen (s. Figur 3). Die systemspezifischen Verwaltungstasks 47, 48 sorgen über einen gegenseitigen Informationsaustausch für eine globale Konsistenz der Listeneinträge. Auf entsprechende externe Kommandos 54 hin initiieren die Verwaltungstasks 47, 48 den Beginn des Austausches von Lebensüberwachungsmeldungen 53, die Datenaktualisierung 42 durch die Datenaktualisierungstasks 43, 44 und auch die explizite Verteilung von Tasks zwischen den beiden Systemen (s. Figur 3).

Nach Ausfall eines Systems 7 und Fortsetzung der Standby-Task 10, die dem durch den Systemausfall bedingten Ausfall der aktiven Task 8 zugeordnet ist, wird das ausgefallene System 7, sofern es nicht bereits durch den Ausfall deaktiviert wurde, deaktiviert. Mit der Umschaltungsaktivierung wird auch die der aktiven Task 8 zugeordnete dezentral angeschlossene Peripherie zum Standby-System 9 bzw. zur nun aktiven Task 10 umgeschaltet.

Nach Behebung der Ausfallursache kann das System 7 wieder als Standby-System bereitgestellt werden. Zu diesem Zweck wird neben den lokalen Tasks, die vor dem Ausfall aktive Task 8 als Standby-Task 10 gestartet. Das wiederhergestellte System 7 wird anschließend dem anderen System 9 als wieder verfügbar gemeldet. Der Austausch der Lebensüberwachungsmeldungen 53 zwischen den beiden Systemen 7, 9 wird auf beiden Systemen 7, 9 wieder aktiviert und - sofern vereinbart - beginnt die Datenaktualisierung 42 der Standby-Task.

Die Verfügbarkeitslisten werden im Rahmen der Wiedereingliederung des reparierten Systems 7 explizit und implizit aktualisiert. Sie geben auf beiden Systemen jeweils taskspezifisch den aktuellen Systemzustand wieder.

Um taskspezifisch den gleichen Systemzustand wieder zu erreichen, wie er vor einer ausfallbedingten Umschaltung (failover) gegeben war, ist es möglich, taskspezifisch eine explizite Umschaltung (failback) im laufenden Betrieb ("on the fly") zu initiieren. Diese Umschaltung wird systemintern unmittelbar nach der Datenübergabe (s. Figur 2) durchgeführt, so dass bei der Fortsetzung der Standby-Task 10 keine Bearbeitungssequenz wiederholt werden muss - befehlsgenaue Umschaltung.

Die taskspezifisch zu initiierende Umschaltung erlaubt eine beliebige Verteilung der Bearbeitungsprogramme zwischen den Systemen 7, 9. Insbesondere zur Optimierung systemspezifischer Bearbeitungslasten bietet sich diese Möglichkeit an.

Damit der Transfer der Lebensüberwachungsmeldungen 53, der programmspezifischen Aktualisierungsdaten und der Daten zur Aktualisierung der Verfügbarkeitslisten nicht von applikationsspezifischen Kommunikationstransfers beeinflusst wird, wird für diese interne Kommunikation zwischen den Systemen ein eigener Kommunikationsbus (Verfügbarkeitslink) eingerichtet. Um gegen einen Ausfall der Kommunikationsstrecke geschützt zu sein, kann ein redundanter Kommunikationsbus vorgesehen werden.

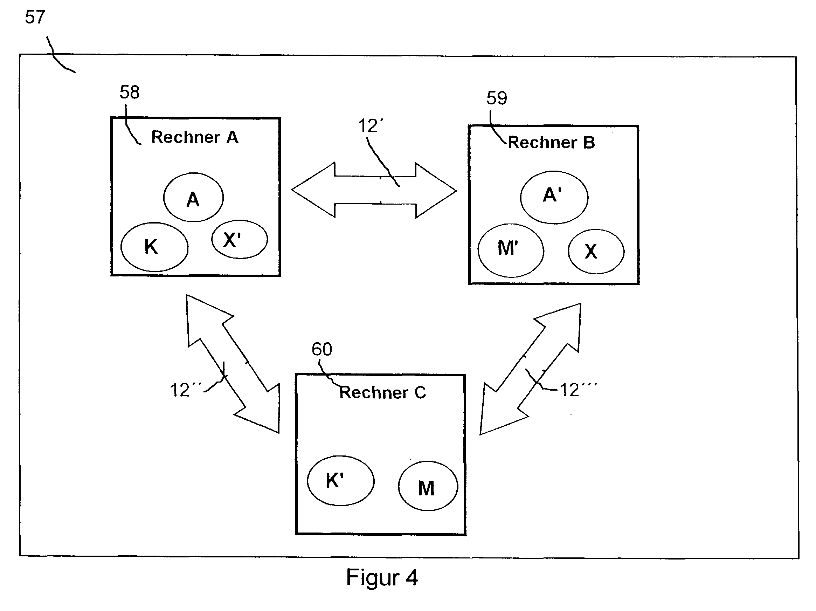

Die Vorgehensweise, zu einer aktiven Task 8 auf einem System A 58 eine wartende Standby-Task 10 auf einem System B 59 vorzusehen, das bei Ausfall der aktiven Task 8 auf System A 58 die Bearbeitung mit aktuellsten Programmdaten ohne Unterbrechung des zu steuernden oder zu regelnden Anwenderprozesses 1 fortsetzt, lässt sich (siehe Figur 4) auf n aktive und n Standby-Tasks, die beliebig auf m miteinander verbundenen Systeme 58, 59, 60 verteilt sind, erweitern. Auf jedem System 58, 59, 60 eines solchen Verbundes können beliebig viele lokale, aktive und Standby-Tasks gestartet sein. Die Begrenzung ist einzig von der Leistungsfähigkeit der Systeme 58, 59, 60 und der Kommunikationsleistung insbesondere für die interne Datenaktualisierung abhängig. Ein Verbund von Rechnern 58, 59, 60, bei dem ein oder mehrere Systeme bei Bedarf die Aufgaben eines anderen Systems übernehmen, wird auch als Last- und Verfügbarkeitsverbund bezeichnet.

Die Zeit für die quittierte Datenaktualisierung zur Standby-Task darf die geforderte Zykluszeit für die aktive Task nicht beeinflussen.

Bei Ausfall der aktiven Prozessbearbeitungstask 8 setzt der übernehmende Rechner 9 die identische - aber wartende - Standby-Prozessbearbeitungstask 10 mit dem Einlesen der aktuellen Eingabedaten fort (roll forward). Auf Basis dieser Werte und den vorliegenden, aktuellsten Ausgabewerte und Variablenwerte werden die neuen Ausgaben errechnet. Die aktuellen Daten des jeweils letzten Zyklus werden der wartenden Standby-Task 10 von einer Aktualisierungstask 43, 44 aus den Datenbereichen 40 der aktiven Task in die entsprechenden Datenbereiche 41 eingefügt ("untergeschoben").

Die erfindungsgemäße *warmer standby*-Lösung ist bei vielen Anwendungen für eine schnelle Fortsetzung der Automatisierungstask auf einem Ersatzsystem 9 vorteilhaft anwendbar.

Im Gegensatz zu einer synchronen, parallelen Bearbeitung der Steuerungstask auf dem (hot) Standby-Rechner, ist der Ersatzrechner 9 bei der warmer (und auch bei der cold- bzw. warm-) Standby-Lösung nicht mit einer zum aktiven System 7 absolut parallelen Bearbeitung ausgelastet, sondern kann anderweitige Aufgaben durchführen. Dadurch, dass das Ersatzsystem 9 in einem anderen internen Systembearbeitungszustand ist als das aktive System 7, können im Gegensatz zu einer *hot standby*-Lösung keine Software-Fehler, die abhängig von einem spezifischen Systembearbeitungszustand auftreten, zu einem Ausfall beider Systeme 7, 9 führen.

Zusammenfassend betrifft die Erfindung somit ein hochverfügbares Rechnersystem 6 sowie ein Verfahren zur Umschaltung von Bearbeitungsprogrammen eines hochverfügbaren Rechnersystems 6. Das Rechnersystem 6 besteht aus mindestens einem ersten 7 und mindestens einem zweiten 9 Rechner. Auf dem ersten Rechner 7 ist mindestens ein erstes Steuerungsprogramm 8 geladen, das zur Erfassung, Verarbeitung und/oder Ausgabe von Prozess-17, 40 und/oder Steuerungsdaten 19 von und/oder an ein Automatisierungssystem vorgesehen ist. Auf dem zweiten Rechner 9 ist mindestens ein zum ersten Steuerungsprogramm 8 identisches zweites Steuerungsprogramm 10 geladen, das an einer vorgebbaren Programmstelle wartet. Weiter sind auf dem ersten 7 und auf dem zweiten 9 Rechner je ein Datenaktualisierungsprogramm 42 geladen und gestartet, die die aktuellen Datenwerte des ersten Steuerungsprogramms 8 des ersten Rechners 7 an einer vorgebbaren Programmstelle erfassen, an den zweiten Rechner 9 übertragen und an den entsprechenden Stellen im Programmablauf und in reservierten Speicherbereichen 41 des zweiten wartenden Steuerungsprogramms 10 hinterlegen.

## Patentansprüche

1. Hochverfügbares Rechnersystem (6) insbesondere zur Steuerung, Regelung und/oder Beobachtung eines technischen Prozesses (1) eines Automatisierungssystems, mit mindestens einem ersten (7) und einem zweiten (9) Rechner, wobei auf dem ersten Rechner (7) mindestens ein erstes Steuerungsprogramm (8) zur Erfassung, Verarbeitung und/oder Ausgabe von Prozess(17, 40) und/oder Steuerungsdaten (19) von und/oder an das Automatisierungssystem geladen ist und wobei auf dem zweiten Rechner (9) mindestens ein zum ersten Steuerungsprogramm (8) identisches zweites Steuerungsprogramm (10) geladen ist, das an einer vorgebbaren Programmstelle wartet, wobei auf dem ersten (7) und auf dem zweiten (9) Rechner mindestens ein Datenaktualisierungsprogramm (42) geladen und gestartet ist, das die aktuellen Datenwerte des ersten Steuerungsprogramms (8) des ersten Rechners (7) an einer vorgebbaren Programmstelle erfasst, an den zweiten Rechner (9) überträgt und an den entsprechenden Stellen im Programmablauf und in reservierten Speicherbereichen des zweiten wartenden Steuerungsprogramms (10) hinterlegt.

2. Rechnersystem nach Anspruch 1,
**dadurch gekennzeichnet,**
**dass** der zweite Rechner (9) nicht für eine zur Bearbeitung des ersten Steuerungsprogramms (8) parallelen Bearbeitung des zweiten Steuerungsprogramms (10) vorgesehen ist.

3. Rechnersystem nach Anspruch 1 oder 2,
**dadurch gekennzeichnet,**
**dass** auf dem ersten (7) und auf dem zweiten (9) Rechner ein Überwachungs- und Verwaltungsprogramm (46, 50) geladen und gestartet ist, das zur Detektion eines Ausfalls des ersten Steuerungsprogramms auf dem ersten Rechner (7), zur Veranlassung einer Fortsetzung der Bearbeitung des zweiten Steuerungsprogramms (8) an der vorgebbaren Programmstelle und zur Umschaltung der Datenausgabe vom ersten Rechner (7) an den zweiten Rechner (9) vorgesehen ist.

4. Rechnersystem nach einem der Ansprüche 1 bis 3,
**dadurch gekennzeichnet,**
**dass** die Programmstelle (32) an der das zweite Steuerungsprogramm wartet unmittelbar nach dem Einsprung in den Bearbeitungszyklus liegt, d. h. vor der Hinterlegung der aktuellen Datenwerte des ersten Steuerungsprogramms (8) des ersten Rechners (7) in den reservierten Speicherbereichen des zweiten Steuerungsprogramms (10).

5. Rechnersystem nach einem der Ansprüche 1 bis 4,
**dadurch gekennzeichnet,**
**dass** das Überwachungs- und Verwaltungsprogramm (46, 50) zur Verwaltung von Verfügbarkeitslisten vorgesehen ist, wobei die Verfügbarkeitslisten Vermerke darüber enthalten,
- welches Steuerungsprogramm bei Fortsetzung der Bearbeitung des zweiten Steuerungsprogramms (10) beendet werden muss,
- ob dem ersten Steuerungsprogrammen (8) das wartende zweite Steuerungsprogramme (10) auf dem zweiten Rechner (9) zugeordnet ist,
- ob das zweite Steuerungsprogramm (10) ein wartendes Steuerungsprogramm ist,
- ob eine Datenaktualisierung erfolgen soll und
- ob die Rechner (7, 9) bereitstehen oder fehlerbedingt nicht verfügbar sind.

6. Rechnersystem nach einem der Ansprüche 1 bis 5,
**dadurch gekennzeichnet,**
**dass** zur Optimierung systemspezifischer Bearbeitungslasten eine nicht ausfallbedingte Umschaltung zwischen der Bearbeitung des ersten (8) und des zweiten (10) Steuerungsprogramms im laufenden Betrieb vorgesehen ist, wobei die Umschaltung unmittelbar nach der Hinterlegung der aktuellen Datenwerte des ersten Steuerungsprogramms (8) des ersten Rechners (7) in den reservierten Speicherbereichen des zweiten wartenden Steuerungsprogramms (10) vorgesehen ist.

7. Verfahren zur Umschaltung von Bearbeitungsprogrammen eines hochverfügbaren Rechnersystems (6), insbesondere zur Steuerung, Regelung und/oder Beobachtung eines technischen Prozesses (1) eines Automatisierungssystems, mit mindestens einem ersten (7) und einem zweiten (9) Rechner, wobei auf dem ersten Rechner (7) mindestens ein erstes Steuerungsprogramm (8) zur Erfassung, Verarbeitung und/oder Ausgabe von Prozess(17, 40) und/oder Steuerungsdaten (19) von und/oder an das Automatisierungssystem geladen ist und wobei auf dem zweiten Rechner (9) mindestens ein zum ersten Steuerungsprogramm (8) identisches zweites Steuerungsprogramm (10) geladen ist, das an einer vorgebbaren Programmstelle wartet, wobei auf dem ersten (7) und auf dem zweiten (9) Rechner mindestens ein Datenaktualisierungsprogramm (42) geladen und gestartet ist, das die aktuellen Datenwerte des ersten Steuerungsprogramms (8) des ersten Rechners (7) an einer vorgebbaren Programmstelle erfasst, an den zweiten Rechner (9) überträgt und an den entsprechenden Stellen im Programmablauf und in reservierten Speicherbereichen des zweiten wartenden Steuerungsprogramms (10) hinterlegt.

8. Verfahren nach Anspruch 7,
**dadurch gekennzeichnet,**
**dass** der zweite Rechner (9) nicht für eine zur Bearbeitung des ersten Steuerungsprogramms (8) parallelen Bearbeitung des zweiten Steuerungsprogramms (10) vorgesehen ist.

9. Verfahren nach Anspruch 7 oder 8,
**dadurch gekennzeichnet,**
**dass** auf dem ersten (7) und auf dem zweiten (9) Rechner ein Überwachungs- und Verwaltungsprogramm (46, 50) geladen und gestartet ist, das zur Detektion eines Ausfalls des ersten Steuerungsprogramms auf dem ersten Rechner (7), zur Veranlassung einer Fortsetzung der Bearbeitung des zweiten Steuerungsprogramms (8) an der vorgebbaren Programmstelle und zur Umschaltung der Datenausgabe vom ersten Rechner (7) an den zweiten Rechner (9) vorgesehen ist.

10. Verfahren nach einem der Ansprüche 7 bis 9,
**dadurch gekennzeichnet,**
**dass** die Programmstelle (32) an der das zweite Steuerungsprogramm wartet unmittelbar nach dem Einsprung in den Bearbeitungszyklus liegt, d. h. vor der Hinterlegung der aktuellen Datenwerte des ersten Steuerungsprogramms (8) des ersten Rechners (7) in den reservierten Speicherbereichen des zweiten Steuerungsprogramms (10).

11. Verfahren nach einem der Ansprüche 7 bis 10,
**dadurch gekennzeichnet,**
**dass** das Überwachungs- und Verwaltungsprogramm (46, 50) Verfügbarkeitslisten verwaltet, wobei die Verfügbarkeitslisten Vermerke darüber enthalten,
- welches Steuerungsprogramm bei Fortsetzung der Bearbeitung des zweiten Steuerungsprogramms (10) beendet werden muss,
- ob dem ersten Steuerungsprogrammen (8) das wartende zweite Steuerungsprogramme (10) auf dem zweiten Rechner (9) zugeordnet ist,
- ob das zweite Steuerungsprogramm (10) ein wartendes Steuerungsprogramm ist,
- ob eine Datenaktualisierung erfolgen soll und
- ob die Rechner (7, 9) bereitstehen oder fehlerbedingt nicht verfügbar sind.

12. Verfahren nach einem der Ansprüche 7 bis 11,
**dadurch gekennzeichnet,**
**dass** zur Optimierung systemspezifischer Bearbeitungslasten zwischen der Bearbeitung des ersten (8) und des zweiten (10) Steuerungsprogramms im laufenden Betrieb ohne Vorliegen eines Ausfalls der Rechner (7, 9) umgeschaltet wird, wobei unmittelbar nach der Hinterlegung der aktuellen Datenwerte des ersten Steuerungsprogramms (8) des ersten Rechners (7) in den reservierten Speicherbereichen des zweiten wartenden Steuerungsprogramms (10) umgeschaltet wird.
